# NEW EUROPEAN PATENT SPECIFICATION

(11) **EP 2 433 355 B2**
(45) Date of publication and mention of the opposition decision: **04.10.2017**
(45) Mention of the grant of the patent: 30.07.2014
(21) Application number: 10724918.7
(22) Date of filing: 20.05.2010
(51) Int. Cl.: H02P 9/10, F02D 37/02, F02D 41/04, F02D 41/08, F02D 41/14

(54) **APPARATUS, SYSTEMS, AND METHODS TO ADDRESS ELECTRICAL LOAD TRANSIENTS, ELECTRICAL FAULTS, AND ELECTRIC POWER GRID DISRUPTIONS**
GERÄT, SYSTEME UND VERFAHREN ZUR BEWÄLTIGUNG VON TRANSIENTEN IN EINER ELEKTRISCHEN LAST, ELEKTRISCHEN FEHLERN UND BEEINTRÄCHTIGUNGEN IM ELEKTRISCHEN NETZ
APPAREIL, DES SYSTÈMES ET MÉTHODES POUR RÉPONDRE AUX TRANSITOIRES DE CHARGE ELECTRIQUE, DES DÉFAUTS ÉLECTRIQUES ET DES PERTURBATIONS DANS UN RÉSEAU ÉLECTRIQUE

(30) Priority: 20.05.2009 US 216662 P
(43) Date of publication of application: 28.03.2012
(73) Proprietor: Cummins Power Generation IP, Inc., Minneapolis, MN 55432 (US)
(72) Inventor: PENDRAY, John, R., Blaine, Minesota 55449 (US); PIERZ, Patrick, M., Columbus IN 47203 (US); PALMER, Bradford, K., Ham Lake MN 55304 (US); KITCHEN, Andrew, Northamptonshire (GB)
(74) Representative: Roberts, Peter David
(86) International application number: PCT/US2010/001497
(87) International publication number: WO 2010/134994

(56) References cited:
- CN-Y- 201 181 925
- DE-C- 662 880
- GB-A- 2 406 920
- US-A- 5 703 410
- US-A1- 2003 024 503
- US-A1- 2004 144 360
- US-A1- 2007 130 952
- US-A1- 2009 058 086
- VAN CUTSEM T. ET AL: 'Voltage Stability of Electric Power Systems', 1998, KLUWER ACADEMIC PUBLISHERS, BOSTON
- BARTELS W. ET AL: 'Generating plants connected to the medium-voltage network', June 2008, BDEW, BERLIN
- 'Grid Code - High and extra high voltage', 01 April 2006, E.ON NETZ GMBH, BAYREUTH pages 1 - 46

## Description

### BACKGROUND

The present application relates to electrical power generation, and more particularly, but not exclusively to techniques to address electric power grid disruptions, faults, and load transients.

During electrical grid disruptions the voltage of the grid can fluctuate rapidly. Under certain conditions, it may be desirable to maintain the grid connection of an engine/generator set (genset) during rapid grid fluctuations to maintain grid integrity and to supply reactive power throughout the fluctuations - designated a Low Voltage Ride-Through (LVRT). During a low-voltage event the generator can lose synchronization with the grid due to the inability of the engine to respond rapidly to the lower power output demand. In some cases, generator damage may be cause by a corresponding pole-slipped induced current.

Further, when a load change or momentary electrical fault causes a large and abrupt change in load on the genset, the engine and generator speed will increase rapidly if something is not done to prevent it. This increase in speed will result in an unacceptable increase in frequency and phase angle deviation of the output voltage. This issue is of particular concern in utility paralleled applications.

More particularly, a line fault event can suppress the voltage to zero and then allow it to return in a period of time that is shorter than a conventional engine and the genset control system can react. This situation can result in the generator phase angle being significantly different than the returning utility voltage phase angle resulting in possible damage to the generating equipment. Under certain conditions, a genset with a Spark Ignition (SI) engine that mixes fuel and air upstream of the cylinder can be particularly vulnerable. While the quantity of fuel provided can be reduced at the first sign of a load change to ameliorate this result, the fuel charge already in existence needs to be addressed - typically through combustion before the new fueling level can take effect.

Thus, there remains a need for further contributions in this area of technology.

CN201181925Y discloses a diesel generator set, in particular an automatic speed-changing constant-frequency constant-voltage diesel generator set, which comprises a diesel engine and an excitation generator; wherein, the excitation generator is connected with the diesel engine through a transmission unit; the electric energy output end of the generator is connected with each phase line of a power supply circuit; the exciting coli of the generator is connected with the output end of a transducer; the transducer is provided with a rotation speed signal input end measuring the rotation speed of the generator and a voltage signal acquisition end measuring the output voltage of the generator; a power sensor connected with the power supply circuit is provided with a signal input end, a voltage signal input end and a control signal output end; the signal input end and the voltage signal input end detect the current value of the power supply circuit; and the control signal output end, which changes along with the current and voltage of the signal input end, is connected with the speed governor of the diesel engine to control the change of the rotation speed of the diesel engine. The generator set ensures that when load is low, the rotation speed of the diesel engine is low as well, and as a result, oil consumption per unit power is greatly reduced. Meanwhile, when the rotation speed of the diesel engine is changed, the outputted frequency and voltage are kept constant, and therefore the quality of the outputted electric energy is improved.

US2004144360 discloses a method for idle speed control of a lean burn spark ignition internal combustion engine using a fuel-based control strategy. In particular, the idle speed control strategy involves using a combination of fuel quantity or timing and ignition timing to achieve desired engine speed or torque while maintaining the air/fuel ratio more lean than prior art systems. Depending on engine operating conditions, the fuel quantity or timing is adjusted to give a more rich air/fuel ratio in order to respond to an engine speed or torque demand increase. Additionally, due to operation close to the lean misfire limit, the spark ignition timing is adjusted away from MBT in response to an engine speed or torque demand decrease. The advantages of this fuel based control system include better fuel economy as well as fast engine response time due to the use of fuel quantity or timing and ignition timing to control engine output.

US2009058086 discloses a wind turbine system provided with a wind turbine rotor, a pitch control mechanism, and an emergency power supply mechanism. The wind turbine rotor includes a blade having a variable pitch angle. The pitch control mechanism drives the blade to control the pitch angle. The emergency power supply mechanism generates electric power from rotation of the wind turbine rotor and feeds the electric power to the pitch control mechanism, in response to occurrence of an accidental drop of a system voltage of a power grid.

### SUMMARY

According to an aspect of the present invention there is provided a method as claimed in Claim 1. According to another aspect of the present invention there is provided an apparatus as claimed in Claim 6. Further embodiments, forms, objects, aspects, benefits, and advantages of the present invention shall become apparent from the figures and description provided herewith.

### BRIEF DESCRIPTION OF THE DRAWINGS

Fig. 1 is a diagrammatic view of an electrical power generation system including a genset with an electric power generator and an internal combustion engine.
Fig. 2 is a diagrammatic view of yet a further electrical power system including parallel gensets.
Fig. 3 is a schematic diagram including circuitry for addressing an electric power grid disruption.
Fig. 4 is a graph illustrating the operation of the circuitry of Fig. 3.

### DETAILED DESCRIPTION OF REPRESENTATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

One embodiment of the present application includes an electrical power system with a genset including an engine and an electric power generator. The genset is coupled to provide electric power to a utility power grid. The system responds to a low voltage grid condition by temporarily routing excessive electric current from the generator through a resistive circuit. Alternatively or additionally, the system addresses abrupt changes in electrical loading (such as a power grid voltage drop) that may be caused by an electrical line fault, by retarding spark ignition of the genset engine in response and/or adjusting field control of the alternator. In one form involving the latter, alternator field voltage is increased or even maximized (sometimes designated "full field") to correspondingly raise alternator current to more closely balance engine torque and alternator torque in response to the power grid voltage reduction. It will be appreciated by those of skill in the art that the genset may or may not operate as a primary or back-up generator and/or may or may not operate in parallel with one or more other gensets or electric power sources.

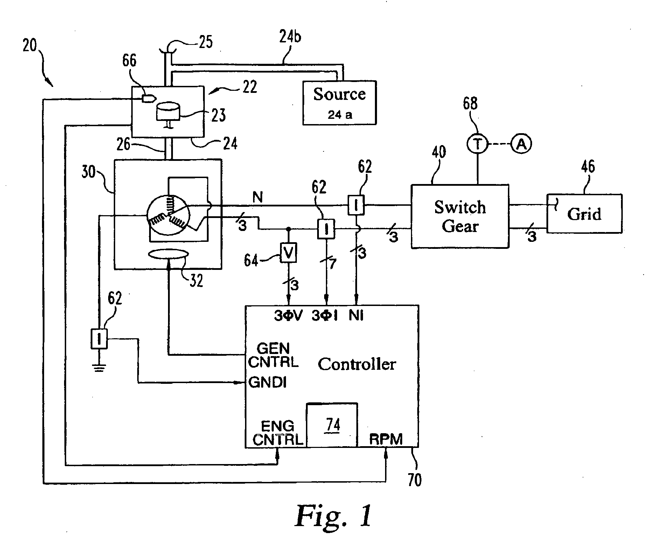

Fig. 1 depicts electrical power system 20 of a further embodiment of the present application. Electrical power system 20 includes an electric power generation genset subsystem 22. Genset 22 includes a prime mover in the form of an internal combustion engine 24 and an alternator or electric power generator 30 to provide a three-phase, Alternating Current (AC), voltage at a target magnitude and frequency. In other arrangements, power may be supplied as a single phase or in such other configuration as would occur to those skilled in the art.

Engine 24 provides rotational mechanical power to generator 30 with rotary drive mechanism 26. Mechanism 26 can be a direct drive member, a device that provides a nonunity turn ratio, a torque converter, a transmission, and/or a different form of rotary linkage as would occur to those skilled in the art. In one arrangement, mechanism 26 is in the form of an extension of a crankshaft of engine 24 that serves as a rotor within generator 30 and thus the engine and generator have a one-to-one turning ratio. The depicted form of engine 24 includes one or more reciprocating pistons 23 and is structured for Spark Ignition (SI) combustion. Correspondingly, engine 24 utilizes an SI compatible fuel such as gasoline, natural gas, liquid petroleum gas, a different gaseous fuel, or other SI compatible fuel type. Engine includes fuel source 24a, supplied by conduit 24b, which is coupled to engine 24. Fuel from source 24a is mixed with air from air intake 25 upstream of pistons 23 to provide a fuel charge thereto.

In other forms, engine 24, mechanism 26, and/or generator 30 can be of other types falling under the scope of the claims; engine 24 may be alternatively fueled and/or have different combustion modes or cycles. A different form of engine-based prime mover can be used to provide mechanical power to generator 30 as an addition to engine 24, like a compressor ignition (CI) engine type, a gas turbine engine type, a two-stroke engine type, among others. Engine 24 can be a two-stroke engine type.

Generator 30 includes excitation field windings 32 operatively coupled to controller 70 to be further described hereinafter. The electric power output of generator 30 is coupled to switchgear 40 to selectively couple and decouple the generator electric power output to/from the public utility power grid 46. For arrangements in which system 20 is dedicated to supply power to grid 46, switchgear 40 typically is in the form of breakers for each power line. Alternatively, for a stand-by or back-up power application of system 20, switchgear 40 would typically include a transfer switch coupled to grid 46 and a local electrical load (not shown). Furthermore, one or more transformers may be provided between switchgear 40 and the connection to grid 46 (not shown). In one nonlimiting implementation, genset 22 includes engine 24 in the form of a gaseous-fueled SI type and generator 30 in the form of an alternator with a rotor as provided on an extension of the engine crankshaft.

Electrical power system 20 further includes voltage sensors 64 to monitor the magnitude of voltage output by generator 30 on conductors 34. Sensors 64 may be in the form of circuitry that samples a voltage drop across a known resistance or the like. Electrical power system 20 further includes current sensors 62 that monitor magnitude of electric current flow through conductors 34, neutral (N), and ground (GND), in association with generator 30. Sensors 62 may be of a standard current transformer type or such other variety as would be known to those skilled in the art. Sensor 66 is of a standard type that provides a sensor signal representing rotational speed of engine 24. In some forms, the sensor signal of sensor 66 is representative of the frequency of the electric power output of generator 30; however, frequency of the electric power output can be determined using other techniques. Sensors 62, 64, and 66 are converted to a digital form for processing using standard techniques. Alternatively or additionally, in other embodiments, an analog form of sensor signal processing may be used.

Electrical power system 20 further includes controller 70 coupled to sensors 62, 64, and 66. Controller 70 may be provided with generator 30 as part of the power generation genset 22 and may be in the form of one controlling device for both engine 24 and generator 30 or may be in the form of two or more controlling devices such as a dedicated Engine Control Module (ECM) in communication with a dedicated generator/genset control module, just to name a few nonlimiting examples. In one particular form, engine 24, generator 30, and controller 70 are provided as integrated equipment. Controller 70 includes inputs from current sensors 62 corresponding to the three phases of the electrical output of generator 30 designated as "3φI, any detected neutral current designated as "NI," and any detected electric earth ground current designated as "GNDI." Sensors 64 provide voltages corresponding to the three-phase electric output of generator 24 designated as "3φV." The engine speed input from sensor 66 is designated as "RPM." Operation of engine 24 is regulated by controller 70 in response to signals therefrom.

Controller 70 includes memory 74. Controller 70 executes operating logic that defines various control, management, and/or regulation functions. This operating logic may be in the form of dedicated hardware, such as a hardwired state machine, programming instructions, and/or a different form as would occur to those skilled in the art. Controller 70 may be provided as a single component or a collection of operatively coupled components; and may be comprised of digital circuitry, analog circuitry, software, or a hybrid combination of any of these types. Controller 70 can include multiple processing units arranged to operate independently, in a pipeline processing arrangement, in a parallel processing arrangement, and/or such different arrangement as would occur to those skilled in the art. When controller 70 is of a multi-component form, it may have one or more components remotely located relative to the others. In one embodiment, controller 70 is a programmable microprocessing device of a solid-state, integrated circuit type that includes one or more processing units and memory. In one form, controller 70 can include a computer network interface to facilitate communications using one or more standard communication protocols. Such an interface may be used to report system status information, receive sensor/detector inputs, operator input/output, communicate other data used in its operation, perform remote debugging or monitoring of controller 70, and/or to receive operating logic updates in the form of programming instructions or the like. It should be appreciated that one or more operator input controls, such as a keyboard, pointer, switches, or the like; and one or more operator outputs, such as a display, alarm, indicator, or the like can be included in genset 22 with appropriate interfacing to controller 70.

Memory 74 may be comprised of one or more types including but not limited to semiconductor, magnetic, and/or optical varieties, and/or may be of a volatile and/or nonvolatile variety. In one form, memory 74 stores programming instructions executed by controller 70 to embody at least a portion of its operating logic. Alternatively or additionally, memory 74 stores data that is manipulated by the operating logic of controller 70. Controller 70 may include signal conditioners, modulators, demodulators, Arithmetic Logic Units (ALUs), Central Processing Units (CPUs), oscillators, control clocks, amplifiers, communication ports, delay devices, signal format converters (such as analog-to-digital and digital-to-analog converters), limiters, clamps, filters, power supplies, and the like as needed to perform various control, management, and regulation operations described in the present application.

Controller 70 may control/monitor a number of aspects of genset 22 operation, such as electrical load change/transience, electronic governor control, automatic voltage regulation, regulated short circuit current, engine speed sensing, engine fault monitor, overload/overcurrent fault, neutral current fault, earth ground fault, short circuit fault, automatic synchronization with other AC power sources, permissive paralleling with other generators, paralleling control, over/undervoltage faults, remote metering and control, generator start-up control, output power calculation and display, reverse power fault, real power load sharing control during parallel operation, reactive power load sharing control during parallel operation, built-in self-diagnostics, and provision for external diagnostics equipment, just to name a few. Two common control functions are: (1) the regulation of the frequency of the generator output waveform typically performed by adjusting engine operation and, (2) the regulation of the voltage and/or electric current produced by generator 30.

Having described various structural and relational aspects of system 20 and its constituents, various modes of operating system 20 are next described. These operating modes/processes can be implemented, as applicable, via the operating logic executed by controller 70 and/or using such other techniques as would occur to those skilled in the art. Upon detecting a transient load situation with controller 70 (such as a low voltage on the power grid or "short circuit" condition) that is likely to result in an undesirable frequency change unless otherwise addressed, one inventive approach is to use a rapid retarding of the engine spark timing to significantly reduce the engine power. The retarded spark timing significantly delays the combustion event and thus the combustion efficiency. Changes to the spark event can be made on a cycle-to-cycle basis and therefore it can provide a near instantaneous engine power reduction in response to a reduction in genset load (such as a drop in grid voltage).

A complementary or alternative method is to more completely interrupt the ignition event in a sequential pattern on a multicylinder engine or entirely during the short transient event, for example. Like the retarded spark timing, this approach will also produce a near instantaneous response. As the control system adjusts the fuel system settings in response to the lower genset load, the spark timing or spark interruptions, may be adjusted as necessary to restore a more normal ignition timing setting.

Still another embodiment is to use the spark timing and/or spark interruption to allow for a rapid increase in the load. For instance, if during this same load disruption, the load were to suddenly reappear, the engine speed would fall dramatically if fueling changes were made as suggested above. However, by maintaining the previous high fueling state and rapidly returning the spark events to a more normal state, the ability of the engine to handle the load will be rapidly restored.

Rapid load changes to a genset can cause unacceptable changes to the engine speed if the system is incapable of a sufficient response in magnitude and duration. Engines that can change the power generated from each cylinder on a cycle-to-cycle basis typically have the best chance of producing an acceptable outcome during these excursions.

Engines for which individual cylinder outputs can be changed on a cycle-by-cycle basis include diesel and port/direct injected SI configurations. Spark ignition engines that introduce the fuel upstream of the cylinder (e.g. throttle body or carbureted) cannot affect this rapid change in load due to the transport delay between the fuel injection location and the cylinder. However, carbureting the fuel upstream of a turbocharger is common due to the lower cost of fuel system hardware and the ability to inject the fuel at low pressures (e.g. pipeline natural gas). The downside for such arrangements can be the aforementioned transport delay, which leads to poor transient response during rapid load changes.

It should be appreciated that spark timing retard and spark interruption can be utilized together or in the alternative to address the load transient. Either technique can change the engine power in a desired fashion in response to a sudden change of load (such as a grid voltage drop). Spark timing alteration is capable of rapidly changing the output of the power cylinder by changing the timing of the combustion event and consequently the efficiency of the combustion process. For example, a significant reduction in genset load (such as a drop in power grid voltage) can be quickly sensed and the spark timing retarded as required to prevent a detrimental increase in speed. During this event, the fuel still burns in the cylinder, but the work extracted during the expansion process can be controllably diminished. Spark interruption is accomplished by eliminating all spark events for a short time period or by sequentially interrupting cylinders as necessary to quickly reduce engine power. Any undesirable accumulation of unburned fuel in the exhaust can be limited by using a short duration of interruption, by skip firing in adjacent cylinders, and/or through various aftertreatment techniques.

Furthermore, if the load is rapidly fluctuating due, for example, to the rapid opening and closing of breakers on the system, then the fueling can be left at a higher setting during the event; while at the same time, changes to the spark events (timing and/or interruption) can be immediately switched in and out to minimize undesirable changes in engine speed. With the previous fueling still in place, the rapid return of normal spark settings will result in a rapid increase in engine load as there is no lag time for fueling changes to be seen. If the load change lasts longer than a predefined period of time, the control system may return the upstream fueling and spark events to their normal settings.

During these transient events, controller 70 monitors frequency deviation and duration to determine total phase angle deviation. Spark event control can then be utilized to control engine speed/frequency to adjust the phase angle deviation back to the nominal value required. Fueling changes, if any, would also be determined by controller 70.

During an event where the voltage is forced to zero, controller 70 can generate a virtual voltage zero-crossing based on the last measured zero-cross, which may be useful when operating in synchronization with another large power source. This virtual zero-cross can be utilized as a reference signal for phase angle resynchronization. Alternately, the zero-cross reference signal could be supplied externally based on information transmitted by the other power source.

In some embodiments, it should be appreciated that aspects of standard genset load and speed/frequency controls may be in operation during transient events; however, these standard controls typically are subordinate to the transient technique(s) applied as described above until the transient event is over. In still another form, the spark control loop could be integrated into a more traditional control architecture in certain embodiments.

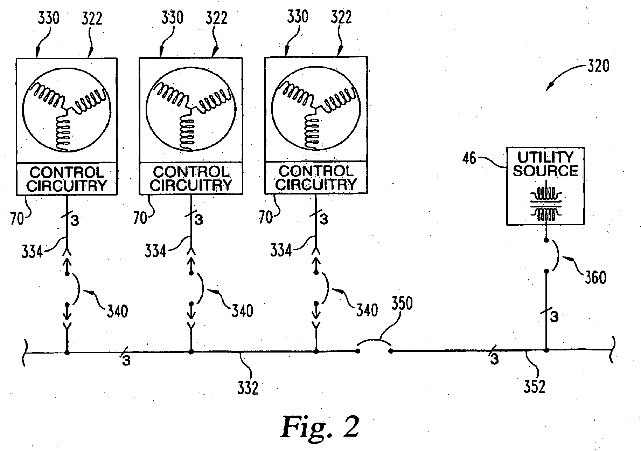

Some or all of these techniques can be applied in a parallel generator system, such as electrical system 320 illustrated in Fig. 2; where like reference numerals refer to like features previously described. System 320 includes a number of electric power generation subsystems 322 each having electric output sensors of the type previously described (not shown), an engine or other prime mover (not shown), generator 330, and controller 70, respectively. Any of the generators 330 set forth in system 320 may be any of the types previously described, such as generator 30, or of a different type. Subsystems 322 are arranged for selective parallel operation to provide a corresponding parallel power source 326. Source 326 also includes power bus 332, generator feeder conductors, 334, and power breaker/switches 340, respectively. Each generator 330 of system 320 can be connected and disconnected selectively to power bus 332 by corresponding feeder conductors 334 through a respective power breaker/switch 340. Source 326 is selectively connected to grid 46 by the closure of power breaker/switch 360 connected to power bus 352.

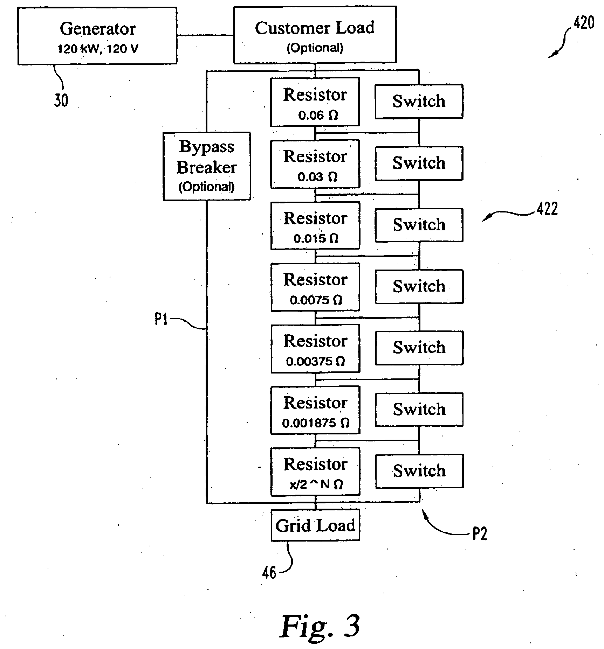

A further embodiment utilizes a series of resistors and switches to absorb extra energy during an LVRT event, maintaining relatively constant voltage upstream from the device. One example of this embodiment is illustrated as system 420 in Fig. 3; where like reference numerals refer to like features previously described. The switching/resistor device 422 also maintains engine speed to improve the engine's ability to maintain synchronization by absorbing the excess power that the grid would otherwise be consuming.

The switching speed determines the rate of controllability. Mechanical switches can function on the order of 10 ms or slower. Though mechanical switches would provide some benefits, faster switching times would be desired in certain implementations, which may turn to solid-state switches having sub-ms switching times as an alternative. To the extent solid-state switches are considered too costly, gas ionization switches, which are also faster than mechanical switches may be utilized, and/or such other switch types as would occur to those skilled in the art.

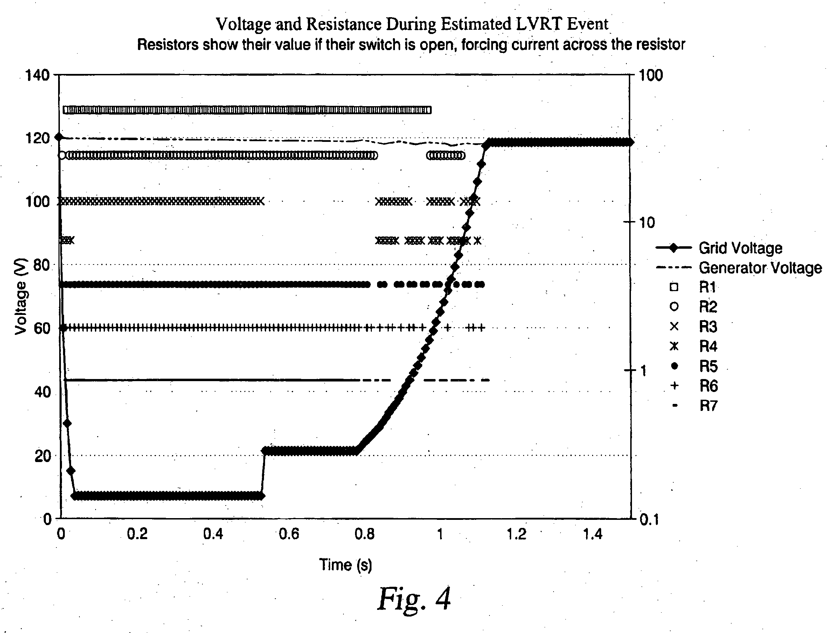

For a typical implementation, the resistor element(s) should be sized to handle 2-20 seconds of use without causing damage such as melting or becoming disfigured from the resistive heating without active cooling. Iron is one nonlimiting example of a common/low-cost material that could provide the conductivity, specific heat, and mass for this application. For example, 50 kg of iron could withstand 1 MW of resistive heating for 5 seconds and increase in temperature by less than 250 K, which would not cause a phase change in the material. After some set amount of time the device would completely decouple the grid from the generator if the undervoltage persists. The Fig. 3 illustration is just one possible example of a resistor/switch network device 422. Voltage control resolution is (Full Voltage)/2ⁿ. In this 7 resistor example, the resolution is 1/128=0.78%. As shown in Fig. 3, the bypass breaker can provide a minimum resistance pathway P1 during normal operation, and would trip at the beginning of the disturbance, giving the switch/resistor device 422 along pathway P2 control over resistance until the grid stabilized or it is determined that the generator 30 should be decoupled. Typically, a device 422 would be applied to each phase of the generator. Fig. 4 depicts a graph of voltage and resistance during an estimated LVRT event.

The LVRT approach of system 420 can be combined with any of the previously described techniques to address load transients, such as retarded spark timing, skip-firing, spark interruption, and associated variants and controls. Further, it may be implemented in arrangements with or without parallel gensets, and in still other embodiments, may additionally or alternatively include one or more other impedance-altering services such as inductors or capacitors, with or without resistive elements such as those shown; and/or network device 422 may be altogether absent.

In a further embodiment that may be used in concert with or in lieu of spark ignition timing control and/or a resistive/switching network; the system uses the alternator/generator field to generate a short circuit current and load the engine with torque when the grid load drops. The additional load on the engine may reduce engine acceleration during the voltage drop period. When the voltage drop ends and the grid load returns, the phase difference between the genset and the grid may not be out of synch enough for pole slipping.

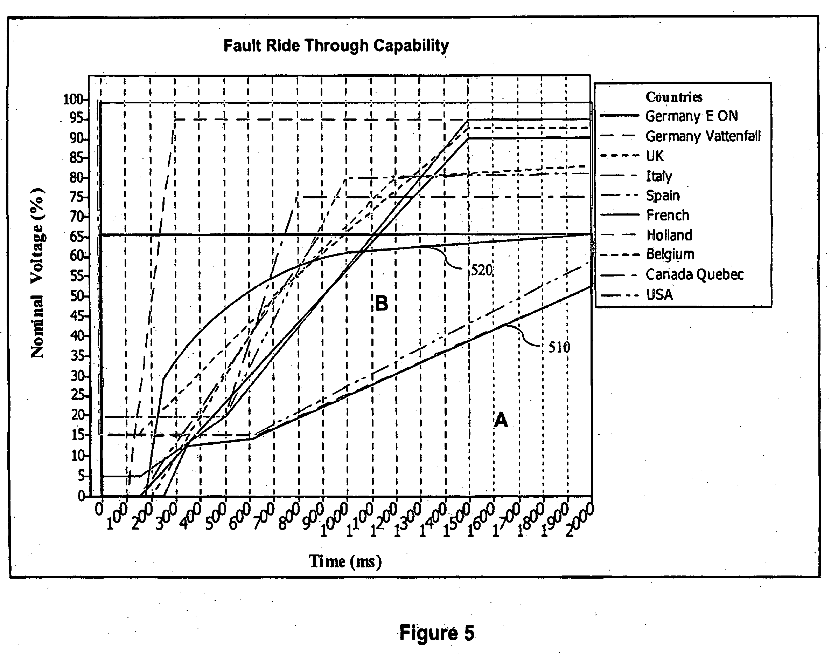

Referring to Figure 5, the graph provides the standards established for low voltage ride through capabilities of various jurisdictions. For nominal voltage levels and durations that are in Area A near the bottom and to the right of line 510, disconnection from the grid may be allowed. The system of an embodiment of the present invention performs to maintain connection without damage to the components when functioning above and to the left of Area A.

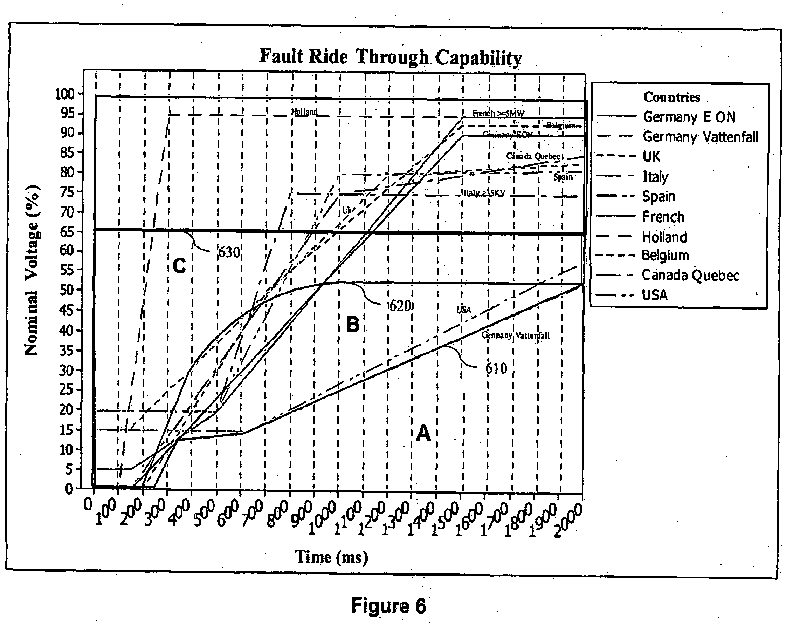

When the conditions of the LVRT are within Area B (below line 520 and above line 510), the system may operate with modified spark timing and an increased alternator field to slow the engine and maintain synchronization with the grid. Figure 6 shows another graph relating to another embodiment where the system performs various features of the present invention to maintain grid connectivity during a LVRT event with like references relating to like features. For nominal voltage levels and durations that are in Area B, the system may include features such as spark timing modification and an increased alternator field. In Area C above line 620 and below line 630, the system may include features such as a resistive circuit in addition to spark timing modification and an increased alternator field. The system may use these features to keep the genset speed and synchronization within acceptable limits.

In still other embodiments two or more of spark ignition timing adjustment, generator field adjustment, and resistive loading are used in combination. In some implementations, it has been surprisingly discovered that spark ignition retardation and increasing the generator field voltage is desirable. In further embodiments, one or more of spark ignition timing adjustment, generator field adjustment, and resistive loading are used in combination with one or more other techniques, such as the inertia increase provided by a flywheel on power shaft of the genset, an otherwise over-sized generator or alternator, a brake of some sort, an engine exhaust brake,

Additionally or alternatively, the alternator/generator could be modified to go to full field faster, and to produce more short circuit current (and sooner). Such things might include increasing exciter voltage to decrease exciter time constants, removing the on alternator/generator exciter and using slip rings with a separate energy source to charge the field quicker. Altering other alternator thermal (and electrical) time constants and impedances to support the increase in short circuit currents in both duration and amplitude and the like.

Also disclosed is a method not including all of the features of the independent claims and comprising: providing electric power to a utility grid, which includes driving an electric power generator coupled to the grid with a spark-ignited internal combustion engine; detecting a change in electrical loading of the generator; in response to the change, changing spark ignition of the engine to adjust power provided by the engine. In one further form of this method, the changing of spark ignition includes retarding spark timing. In another form of this method, the changing of spark ignition includes interrupting the spark ignition.

Also disclosed is an apparatus not including all of the features of the independent claims and comprising: a genset including an electric power generator structured for coupling to an electric power grid, a spark-ignited internal combustion engine to drive the generator, a controller structured to regulate operation of the genset; wherein the controller executes operating logic to detect a change in electrical loading of the generator and in response to the change, to adjust spark ignition of the engine. The adjustment of spark ignition may include retarding spark timing and/or interrupting the spark ignition in variations of the apparatus.

Also disclosed is a further apparatus not including all of the features of the independent claims and comprising: a genset including an electric power generator, a spark-ignited internal combustion engine to drive the generator, means for providing electric power generated from the generator to a utility grid, means for detecting a change in electrical loading of the generator, and means for adjusting spark ignition of the engine in response to the change.

In further disclosed forms, the adjusting means includes means for retarding spark timing and/or means for interrupting the spark ignition.

Also disclosed is a method not including all of the features of the independent claims and comprising: providing electric power to a utility grid, which includes driving an electric power generator coupled to the grid with an internal combustion engine; detecting a change to a low voltage condition on the grid; in response to the low voltage condition, routing electric current output by the generator from a less electrically resistive pathway to a more electrically resistive pathway to absorb excess energy, and returning the electric current output to the less electrically resistive pathway after the low voltage condition ceases. Further method variations include: providing a series of resistors and switches to adjust electrical resistance along the more electrically resistive pathway, providing a switch to electrically open or close the less electrically resistive pathway, providing an electrical load between the generator and the pathways, maintaining engine speed and/or synchronization with the grid, and/or addressing an electrical load transient by adjusting spark ignition in response to detection of such transient.

Still another disclosed apparatus not including all of the features of the independent claims and comprises: a genset including an electric power generator structured for coupling to an electric power grid, a spark-ignited internal combustion engine to drive the generator, a controller structured to regulate operation of the genset; wherein the controller executes operating logic to detect a change in electrical loading of the generator and in response to the change, to adjust spark ignition of the engine. The adjustment of spark ignition may include retarding spark timing and/or interrupting the spark ignition in various other forms.

Another disclosed apparatus not including all of the features of the independent claims comprises: a genset including an electric power generator, an engine to drive the generator, means for detecting a change to a low voltage condition on the grid; in response to the low voltage condition, means for routing electric current output by the generator from a less electrically resistive pathway to a more electrically resistive pathway to absorb excess energy; and means for returning the electric current output to the less electrically resistive pathway after the low voltage condition ceases. Additionally, apparatus variations thereof include means for providing a series of resistors and switches to adjust electrical resistance along the more electrically resistive pathway, means for providing a switch to electrically open or close the less electrically resistive pathway, means for providing an electrical load between the generator and the pathways, means for maintaining engine speed and/or synchronization with the grid, and/or means for addressing an electrical load transient by adjusting spark ignition in response to detection of such transient.

Yet another disclosed apparatus not including all of the features of the independent claims comprises: a genset including an electric power generator structured to provide electric power to a power utility grid, an engine to drive the generator, and circuitry selectively coupling the generator to the grid including a first electrical pathway and a second electrical pathway in parallel with the first electrical pathway, the first pathway being less electrically resistive than the second pathway, and a controller structured to execute operating logic to detect a low voltage condition on the grid and route electric current from the generator from the first pathway to the second pathway to absorb excess energy and to adjust resistance of the second pathway. Additional features thereof include means for rerouting the current to flow through the first path after the low voltage condition ceases, and/or wherein the second pathway includes a number of switches and resistors to provide a switch-adjustable variable resistance, and/or wherein the first pathway includes a switch in the form of a circuit breaker.

Any theory, mechanism of operation, proof, or finding stated herein is meant to further enhance understanding of the present invention and is not intended to make the present invention in any way dependent upon such theory, mechanism of operation, proof, or finding. It should be understood that while the use of the word preferable, preferably or preferred in the description above indicates that the feature so described may be more desirable, it nonetheless may not be necessary and embodiments lacking the same may be contemplated as within the scope of the invention, that scope being defined by the claims that follow. In reading the claims it is intended that when words such as "a," "an," "at least one," "at least a portion" are used there is no intention to limit the claim to only one item unless specifically stated to the contrary in the claim. Further, when the language "at least a portion" and/or "a portion" is used the item may include a portion and/or the entire item unless specifically stated to the contrary.

Variations and modifications are possible within the scope of the appended claims.

## Claims

1. A method, comprising:
providing electric power to a public utility power grid (46), which includes driving an electric power generator (30) coupled to the utility power grid (46) with a spark-ignited internal combustion engine (24);
detecting a low voltage condition of the utility power grid (46) due to abrupt changes in electrical loading caused by a low voltage ride through event; and
in response to the condition providing low voltage ride through in which connection and synchronisation between the generator (30) and the utility power grid (46) is maintained throughout the duration of the low voltage condition, wherein maintaining connection and synchronization between the generator (30) and the utility power grid (46) throughout the duration the low voltage ride through event includes maintaining a high fueling state of the engine (24) which existed prior to detecting the low voltage condition while changing spark ignition of the engine (24) to reduce power provided by the engine (24) and increasing field voltage of the generator (30) to increase torque on the generator (30) to more closely balance torque on the engine (24) and the generator (30), the high fueling state of the engine (24) being maintained throughout the low voltage ride through event;
wherein the method includes in response to the condition, routing electric current output by the generator (30) from a less electrically resistive pathway (P1) to a more electrically resistive pathway (P2) to absorb excess energy, and
returning the electric current output to the less electrically resistive pathway (P1) after the low voltage condition ceases.

2. The method of claim 1, wherein the changing of spark ignition includes retarding spark timing.

3. The method of any of the preceding claims wherein the changing of spark ignition includes interrupting the spark ignition.

4. The method of any of the preceding claims, which includes supplying a natural gas fuel to the engine (24).

5. The method of any of the preceding claims, which includes adjusting ignition timing of the engine (24) in response to field the condition.

6. inventive apparatus comprising:
a genset including an electric power generator (30) structured for coupling to an electric utility power grid (46);
a sensing device;
a spark-ignited internal combustion engine (24) to drive the generator (30); and
a controller (70) structured to regulate operation of the genset, the controller (70) being responsive to the sensing device to determine a low voltage condition of the electric utility power grid (46) due to abrupt changes in electrical loading caused by a low voltage ride through event and in response to the condition to maintain connection and synchronisation between the generator (30) and the utility power grid (46) throughout the duration of the low voltage condition, wherein maintaining connection and synchronisation between the generator (30) and the utility power grid (46) throughout the duration of the low voltage ride through event includes maintaining a high fueling state of the engine (24) which existed prior to detecting the low voltage condition while providing one or more output signal to change spark ignition of the engine (24) to reduce power provided by the engine (24)and providing one or more output signals to increase the field voltage of the generator to more closely balance torque on the engine (24) and the generator (30), the high fueling state of the engine (24) being maintained throughout the low voltage ride through event;
wherein the apparatus further comprises means for routing electric current output by the generator from a less electrically resistive pathway (P1) to a more electrically resistive pathway (P2) to absorb excess energy in response to the condition and returning the electric current output to the less electrically resistive pathway (P1) after the low voltage condition ceases.

7. The apparatus of claim 6, further comprising a fuel source containing a gaseous fuel for the engine (24).

8. The apparatus of claim 6, further comprising means for adjusting spark ignition timing of the engine (24); or
wherein the controller (70) includes means for retarding spark ignition timing and means for interrupting spark ignition.

9. The apparatus of any of 6 8 further comprising a fuel source (24a) containing a gaseous fuel for the engine (24).

## Patentansprüche

1. Verfahren, umfassend:
Bereitstellen von elektrischem Strom für ein Stromversorgungsnetz (46), was einschließt: Antreiben eines elektrischen Stromgenerators (30), der mit dem Stromversorgungsnetz (46) gekoppelt ist, mit einem Motor mit funkengezündeter interner Verbrennung (24);
Ermitteln eines Zustandes niedriger Spannung des Stromversorgungsnetzes (46) aufgrund plötzlicher Änderungen der elektrischen Last, die durch ein Ereignis hervorgerufen werden, das eine Beibehaltung der Spannung erfordert; und
als Antwort auf den Zustand, erfolgendes Beibehalten der Spannung, wobei die Verbindung und die Synchronisation zwischen dem Generator (30) und dem Stromversorgungsnetz (46) über die gesamte Dauer des Zustandes niedriger Spannung aufrechterhalten werden, wobei das Beibehalten der Verbindung und der Synchronisation zwischen dem Generator (30) und dem Stromversorgungsnetz (46) über die gesamte Dauer des Ereignisses, das eine Beibehaltung der Spannung erfordert, das Beibehalten eines Zustandes hoher Brennstoffzufuhr des Motors (24) einschließt, der vor dem Ermitteln des Zustandes niedriger Spannung bestand, während die Funkenzündung des Motors (24) geändert wird, um den durch den Motor (24) bereitgestellten Strom zu verringern, und die Feldspannung des Generators (30) erhöht wird, um das Drehmoment am Generator (30) zu erhöhen, um das Drehmoment am Motor (24) und am Generator (30) enger anzugleichen, wobei der Zustand hoher Brennstoffzufuhr des Motors (24) über die gesamte Dauer des Ereignisses, das eine Beibehaltung der Spannung erfordert, beibehalten wird;
wobei das Verfahren Folgendes einschließt: als Antwort auf den Zustand erfolgendes Umleiten von elektrischem Strom, der durch den Generator (30) abgegeben wird, von einem Strompfad mit niedrigerem elektrischem Widerstand (P1) zu einem Strompfad mit höherem elektrischem Widerstand (P2), um überschüssige Energie zu absorbieren, und
Zurückleiten des abgegebenen elektrischen Stroms zum Strompfad mit niedrigerem elektrischem Widerstand (P1), nachdem der Zustand niedriger Spannung aufgehört hat.

2. Verfahren nach Anspruch 1, wobei das Ändern der Funkenzündung einschließt: Verzögern des Zündzeitpunktes.

3. Verfahren nach einem der vorhergehenden Ansprüche, wobei das Ändern der Funkenzündung einschließt: Unterbrechen der Funkenzündung.

4. Verfahren nach einem der vorhergehenden Ansprüche, welches einschließt: Zuführen eines Erdgasbrennstoffs zum Motor (24).

5. Verfahren nach einem der vorhergehenden Ansprüche, welches einschließt: Nachregeln des Zündzeitpunktes des Motors (24) als Antwort auf den Zustand.

6. Erfindungsvorrichtung, umfassend:
einen Generatorsatz, der einen elektrischen Stromgenerator (30) einschließt, der für die Kopplung mit einem Stromversorgungsnetz (46) aufgebaut ist;
ein Messgerät;
einen Motor mit funkengezündeter interner Verbrennung (24), um den Generator (30) anzutreiben; und
eine Steuerungseinrichtung (70), die dafür aufgebaut ist, den Betrieb des Generatorsatzes zu regeln, wobei die Steuerungseinrichtung (70) auf das Messgerät anspricht, um einen Zustand niedriger Spannung des Stromversorgungsnetzes (46) aufgrund plötzlicher Änderungen der elektrischen Last, die durch ein Ereignis, das eine Beibehaltung der Spannung erfordert, verursacht werden, zu ermitteln und als Antwort auf den Zustand die Verbindung und die Synchronisation zwischen dem Generator (30) und dem Stromversorgungsnetz (46) über die gesamte Dauer des Zustandes niedriger Spannung aufrechtzuerhalten, wobei das Beibehalten der Verbindung und der Synchronisation zwischen dem Generator (30) und dem Stromversorgungsnetz (46) über die gesamte Dauer des Ereignisses, das eine Beibehaltung der Spannung erfordert, das Beibehalten eines Zustandes hoher Brennstoffzufuhr des Motors (24) einschließt, der vor dem Ermitteln des Zustandes niedriger Spannung bestand, während ein oder mehrere Ausgangssignale bereitgestellt werden, um die Funkenzündung des Motors (24) zu ändern, um den durch den Motor (24) bereitgestellten Strom zu verringern, und ein oder mehrere Ausgangssignale bereitgestellt werden, um die Feldspannung des Generators zu erhöhen, um das Drehmoment am Motor (24) und am Generator (30) enger anzugleichen, wobei der Zustand hoher Brennstoffzufuhr des Motors (24) über die gesamte Dauer des Ereignisses, das eine Beibehaltung der Spannung erfordert, beibehalten wird;
wobei die Vorrichtung ferner ein Mittel zum als Antwort auf den Zustand erfolgenden Umleiten von elektrischem Strom, der durch den Generator abgegeben wird, von einem Strompfad mit niedrigerem elektrischem Widerstand (P1) zu einem Strompfad mit höherem elektrischem Widerstand (P2), um überschüssige Energie zu absorbieren, und zum Zurückleiten des abgegebenen elektrischen Stroms zum Strompfad mit niedrigerem elektrischem Widerstand (P1), nachdem der Zustand niedriger Spannung aufgehört hat, umfasst.

7. Vorrichtung nach Anspruch 6, ferner eine Brennstoffquelle umfassend, die einen gasförmigen Brennstoff für den Motor (24) enthält.

8. Vorrichtung nach Anspruch 6, ferner ein Mittel zum Nachregeln des Zündzeitpunktes des Motors (24) umfassend; oder
wobei die Steuerungseinrichtung (70) Mittel zum Verzögern des Zündzeitpunktes und Mittel zum Unterbrechen der Funkenzündung einschließt.

9. Vorrichtung nach einem der Ansprüche 6-8, ferner eine Brennstoffquelle (24a) umfassend, die einen gasförmigen Brennstoff für den Motor (24) enthält.

## Revendications

1. Procédé comprenant les étapes consistant à :
fournir de l'énergie électrique à un réseau de distribution électrique (46), ce qui comprend l'entraînement d'un générateur d'énergie électrique (30) couplé au réseau de distribution électrique (46) grâce à un moteur à combustion interne à allumage commandé (24) ;
détecter un état de basse tension du réseau de distribution électrique (46) dû à des changements brusques de la charge électrique causés par un événement de maintien d'alimentation en basse tension ; et
en réponse à l'état fournissant un maintien d'alimentation en basse tension dans laquelle la connexion et la synchronisation entre le générateur (30) et le réseau de distribution électrique (46) est maintenue durant toute la durée de l'état de basse tension, dans lequel le maintien de la connexion et la synchronisation entre le générateur (30) et le réseau de distribution électrique durant toute la durée de l'événement de maintien d'alimentation en basse tension inclut de maintenir un état d'alimentation élevée en carburant du moteur (24) qui existait préalablement à la détection de l'état de basse tension tout en changeant l'allumage du moteur (24) pour réduire l'énergie fournie par le moteur (24) et en augmentant la tension de champ du générateur (30) pour augmenter le couple du générateur (30), afin d'équilibrer de manière plus précise le couple s'appliquant au moteur (24) et au générateur (30), l'état d'alimentation élevée en carburant du moteur (24) étant maintenu durant toute la durée de l'événement de maintien d'alimentation en basse tension ;
dans lequel le procédé inclut une étape consistant à, en réaction audit état, acheminer une production de courant électrique par le générateur (30) d'un trajet de moindre résistance électrique (P1) vers un trajet de plus grande résistance électrique (P2) pour absorber l'énergie excédentaire, et
renvoyer la production de courant électrique vers le trajet de moindre résistance électrique (P1) après que l'état de basse tension a cessé.

2. Procédé selon la revendication 1, dans lequel l'étape consistant à modifier l'allumage comprend une étape consistant à retarder le calage de l'allumage.

3. Procédé selon l'une quelconque des revendications précédentes, dans lequel l'étape consistant à modifier l'allumage comprend une étape consistant à interrompre l'allumage.

4. Procédé selon l'une quelconque des revendications précédentes, qui comprend une étape consistant à fournir un carburant en gaz naturel au moteur (24).

5. Procédé selon l'une quelconque des revendications précédentes, qui comprend une étape consistant à ajuster le calage de l'allumage du moteur (24) en réaction à l'état ; et

6. Appareil selon la présente invention comprenant :
une génératrice comprenant un générateur d'énergie électrique (30) structuré pour un couplage à un réseau de distribution électrique (46) ;
un dispositif de détection ;
un moteur à combustion interne à allumage commandé (24) pour entraîner le générateur (30) ; et
une unité de commande (70) structurée pour réguler le fonctionnement de la génératrice, l'unité de commande (70) réagissant au dispositif de détection pour déterminer un état de basse tension du réseau de distribution électrique (46) dû à des changements brusques de la charge électrique causés par un événement de maintien d'alimentation en basse tension et en réponse à l'état de maintien de la connexion et la synchronisation entre le générateur (30) et le réseau de distribution électrique (46) durant toute la durée de l'état de basse tension, dans lequel le maintien de la connexion et de la synchronisation entre le générateur (30) et le réseau de distribution électrique (46) durant toute la durée de l'événement de maintien d'alimentation en basse tension inclut de maintenir un état d'alimentation élevée en carburant du moteur (24) qui existait préalablement à la détection de l'état de basse tension tout en fournissant un ou plusieurs signal(aux) de sortie pour modifier l'allumage du moteur (24), afin de réduire l'énergie fournie par le moteur (24) et tout en fournissant un ou plusieurs signal(aux) de sortie pour augmenter la tension de champ du générateur, afin d'équilibrer de manière plus précise le couple s'appliquant au moteur (24) et au générateur (30), l'état d'alimentation élevée en carburant du moteur (24) étant maintenu durant toute la durée de l'événement de maintien d'alimentation en basse tension;
dans lequel l'appareil comprend en outre un moyen pour acheminer une production de courant électrique par le générateur (30) d'un trajet de moindre résistance électrique (P1) vers un trajet de plus grande résistance électrique (P2) afin d'absorber l'énergie excédentaire en réaction audit état et retourner la production de courant électrique vers le trajet de moindre résistance électrique (P1), après que l'état de basse tension a cessé.

7. Appareil selon la revendication 6, comprenant en outre une source de carburant contenant un carburant sous forme gazeuse pour le moteur (24).

8. Appareil selon la revendication 6, comprenant en outre un moyen pour ajuster une séquence d'allumage commandé du moteur (24) ; ou
dans lequel l'unité de commande (70) comprend un moyen pour retarder le calage de l'allumage et un moyen pour interrompre l'allumage commandé.

9. Appareil selon l'une quelconque des revendications 6 à 8 comprenant en outre une source de carburant (24a) contenant un carburant sous forme gazeuse pour le moteur (24).
